Europäisches Patentamt

European Patent Office

Office européen des brevets

(19)

(11) Numéro de publication: **0 001 027**
**B1**

(12) **FASCICULE DE BREVET EUROPEEN**

(45) Date de publication du fascicule du brevet: **10.02.82**

(21) Numéro de dépôt: **78400077.0**

(22) Date de dépôt: **18.08.78**

(51) Int. Cl.³: **C 01 B 17/76,**
**G 01 N 21/27**

(54) Dispositif pour la mesure in situ et en continu de la teneur en acide sulfurique vésiculaire au cours de la fabrication d'acide sulfurique.

(30) Priorité: **31.08.77 FR 7726401**

(43) Date de publication de la demande:
**07.03.79 Bulletin 79/5**

(45) Mention de la délivrance du brevet:
**10.02.82 Bulletin 82/6**

(84) Etats contractants désignés:
**BE DE FR GB**

(56) Documents cités:
**FR - A - 2 230 998**
**US - A - 3 198 721**
**US - A - 3 462 608**
**US - A - 3 665 201**
**Chemie Ingenieur-Technick,**
**Verlag Chemie, 44 Jahrg. 1972/Nr. 13**
**Weinheim, pages 858—860**

(73) Titulaire: **P C U K PRODUITS CHIMIQUES UGINE KUHLMANN**
**Service Propriété Industrielle Tour Manhattan**
**F-92087 PARIS LA DEFENSE 2 Cédex 21 (FR)**

(72) Inventeur: **Montamat, Michel**
**73 rue Gabriel Péri**
**F-92700 Colombes (FR)**

(74) Mandataire: **Monceaux, Pierre et al,**
**PRODUITS CHIMIQUES UGINE KUHLMANN**
**Service Propriété Industrielle**
**Tour Manhattan Cédex 21 F-92087 Paris La Defense (FR)**

Courier Press, Leamington Spa, England.

Dispositif pour la mesure in situ et en continu de la teneur
en acide sulfurique vésiculaire au cours de la fabrication d'acide sulfurique

La présente invention se rapporte à une amélioration aux procédés de fabrication de l'acide sulfurique par le procédé dit de contact, fonctionnant sous pression ou à la pression atmosphérique. Plus particulièrement, la présente invention concerne un dispositif pour la mesure in situ et en continu de la teneur en acide sulfurique vésiculaire des gaz sortant des tours d'échange gaz-liquide arrosées à l'acide sulfurique, ayant pour fonction le séchage de l'air ou du gaz de procédé ou l'absorption du $SO_3$ formé.

Dans toute colonne d'échange gaz-liquide, il y a formation de particules liquides de dimensions variables qui sont entraînées dans le courant gazeux. Les colonnes utilisées dans la fabrication de l'acide sulfurique sont du type à garnissage, et on y observe la formation de particules d'acide sulfurique de dimension en général inférieure à 20 microns appelées "vésicules". Ces particules constituent "l'acide sulfurique vésiculaire". Cette formation d'acide sulfurique vésiculaire est très gênante car elle entraîne la dégradation des appareils en aval sur le procédé, et, à la colonne de queue, un phénomène de pollution préjudiciable.

Il existe donc un besoin industriel de disposer de moyens permettant de réduire la teneur en acide sulfurique vésiculaire à une valeur acceptable. Divers dispositifs ont été proposés dans ce but qui tous, outre leur prix élevé, n'ont pour but que de chercher à arrêter les vésicules formées plutôt que d'en limiter la formation, n'offrant donc pas la sécurité nécessaire en cas de mauvais fonctionnement.

L'article Chemie Ingenieur-Technik, Verlag Chemie, 44 Jahrg. 1972/No. 13 Weinheim, p. 858—860 décrit une méthode et un dispositif pour déterminer séparément la quantité de $H_2SO_4$—brouillard, $H_2SO_4$ vésiculaire et $SO_3$ non absorbé dans les gaz issus du procédé de fabrication de $H_3SO_4$ par contact, faisant appel à des dosages chimiques. Les courants gazeux sont prélevés à la sortie de la tour de contact et directement analysés. Il y est indiqué qu'une teneur en acide sulfurique vésiculaire supérieure à 60—70mg/cm$^3$ peut provenir d'une température d'entrée des gaz élevée. Il est mentionné qu'une formation élevée d'acide sulfurique vésiculaire peut être éliminée au moyen d'un filtre.

Le brevet US 3 462 608 décrit une méthode et un dispositif pour détecter les particules en suspension dans un fluide. Le fluide pénètre dans une enceinte par un tube convergent où il est aspiré et sort par la section la plus étroite. A l'intérieur de cette enceinte se trouvent deux baguettes contenant des fibres optiques émettrices et réceptrices, lesdites baguettes traversant deux trous percés dans une plaque fixée à l'enceinte. Un rayon lumineux est ainsi envoyé sur le fluide à sa sortie du tube et la lumière réfléchie par les particules arrive sur un détecteur photoélectrique et engendre les impulsions électriques correspondantes.

Il est possible d'agir sur les paramètres influençant la formation des vésicules afin d'en régler et d'en contrôler la quantité pour qu'elle ne dépasse pas un seuil convenable. Ces paramètres sont notamment, pour une installation donnée, la température de l'acide d'arrosage, le titre de cet acide, la température des gaz et la charge de l'installation.

Ainsi, dans une tour d'absorption due $SO_3$, il est possible de définir un titre optimum de cet acide. Par ailleurs, au-delà d'un certain seuil, une augmentation de la température des gaz et une augmentation de la charge de la tour provoquent une augmentation de la teneur en acide sulfurique vésiculaire.

La présente invention fournit un dispositif détecteur pour la mesure in situ et en continu de la teneur en acide sulfurique vésiculaire des gaz sortant des tours d'échange gaz-liquide au cours de la préparation d'acide sulfurique par le procédé de contact. Il est caractérisé en ce qu'il comprend:

(A) un corps constitué par un cylindre creux (1) en acier inoxydable, à l'intérieur duquel se trouvent deux tubes guides (2) et (2') en acier inoxydable ayant des axes parallèles à l'axe dudit cylindre creux et équidistants dudit axe, contenant chacun une fibre optique (3) et (3') l'une étant la fibre émettrice, l'autre la fibre réceptrice.

(B) une tête en polytétrafluoroéthylène (4) s'emboîtant à force dans la partie supérieure dudit corps, dont la face supérieure a la forme d'une cuvette à fond plat et dont la face inférieure comporte deux trous de visée cylindrique (5) et (5') de même axe que ceux desdits tubes guides, et une partie centrale (6) s'insérant de façon étanche entre lesdits tubes guides.

(C) deux capuchons (7') en polytétrafluoroéthylène entourant chacun de façon étanche l'une desdites fibres optiques à leur partie supérieure, comportant à leur partie supérieure un alésage (9) recevant une fenêtre en verre fixée de façon étanche, et à leur partie inférieure un filetage correspondant au filetage ménagé dans la fibre optique utilisée, ledit corps étant percé à sa partie inférieure de deux orifices situés à l'extrémité opposée à la tête (4) recevant chacun un tuyau d'amenée d'air, l'une permettant de balayer l'ensemble de l'appareil, l'autre débouchant en (10) dans ladite tête en polytétrafluoroéthylène au niveau des trous de visée.

Ce dispositif est utilisable dans les procédés de fabrication de l'acide sulfurique, qu'ils soient à simple ou double catalyse, à pression atmosphérique ou sous pression. Il permet d'effectuer dans les gaz sortant de chaque tour de séchage ou d'absorption, la mesure in situ et en continu de la teneur en acide sulfurique vésiculaire, et de corriger en conséquence un ou plusieurs paramètres influençant la formation des vésicules, afin de régler leur tenneur en deçà d'un seuil prédéterminé.

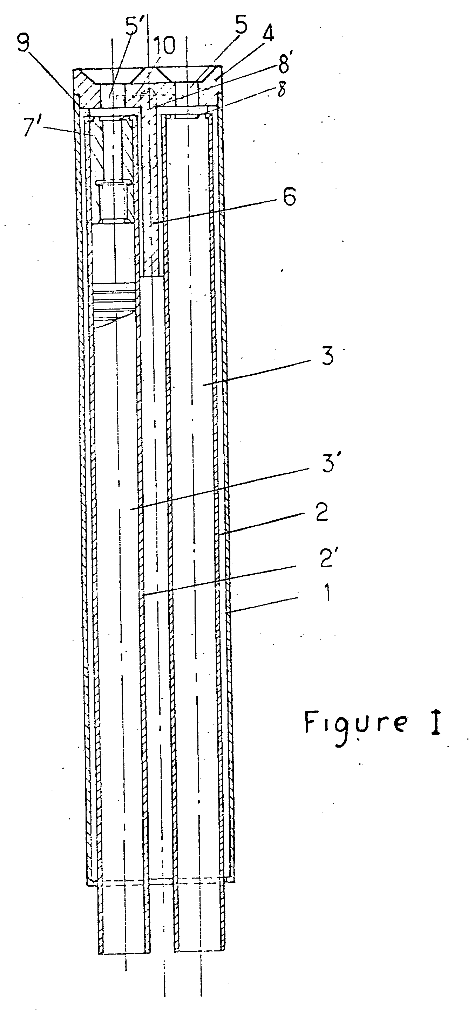

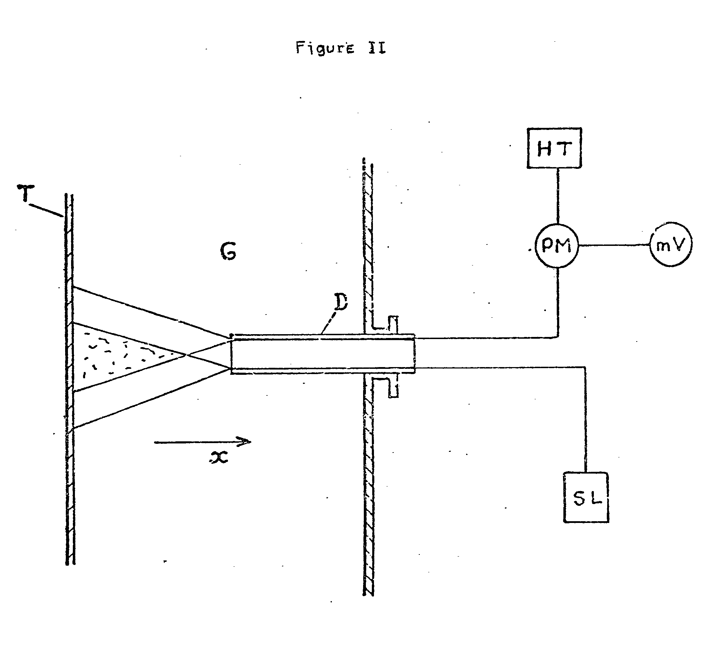

L'invention sera à présent décrite plus en détails en se référant aux figures I et II annexées. La figure I représente une vue en coupe du détecteur selon l'invention. La figure II représente schématiquement l'installation de mesure in site de la teneur en vésicules du gaz à analyser.

Le détecteur de vésicules selon l'invention, représenté sur la figure I, comporte:

A - Un corps constitué par un cylindre creux (1) en acier inoxydable, à l'intérieur duquel se trouvent deux tubes guides (2) et (2') en acier inoxydable, ayant des axes parallèles à l'axe du cylindre creux et équidistants dudit axe du cylindre creux, contenant chacun une fibre optique (3) et (3').

B - Une tête en polytétrafluoroéthylène (4) s'emboitant à force dans la partie supérieure dudit corps, dont la face supérieure a la forme d'une curvette à fond plat et dont la face inférieure comporte deux trous de visée cylindriques (5) et (5') de même axe que ceux des tubes guides et une partie centrale (6) venant s'insérer de façon étanche entre les tubes guides.

C - Deux capuchons (7) (non représenté à cause de la coupe partielle de la Fibre (3)) et (7') entourant chacun de façon étanche l'une des fibres optiques (3) et (3') dans leur partie supérieure, comportant à leur partie supérieure un alésage (9) recevant une fenêtre en verre (8) et (8') fixée de façon étanche et, à leur partie inférieure, un filetage correspondant au filetage ménagé dans la fibre optique utilisée. Ledit corps est percé à sa partie inférieure de deux orifices (none représentés) situés à l'extrémité opposée à la tête (4), recevant chacun un tuyau d'amenée d'air, l'une permettant de balayer l'ensemble de l'appareil, l'autre venant s'insérer en (10) dans la tête en polytétrafluoroéthylène au niveau des trous de visée, l'air s'échappant perpendiculairement aux trous de visée.

Sur la figure II, le détecteur (D) est placé dans la tour (T) contenant la gaz à analyser (G). L'une des fibres, dite fibre émettrice, est reliée à une source lumineuse (SL), l'autre fibre, dite fibre réceptrice, est reliée à un photomultiplicateur (PM) connecté à une alimentation haute tension (HT) et à un millivoltmètre (mV). Le détecteur (D) peut être introduit dans la tour (T) de façon coulissante pour permettre d'analyser le gaz suivant la direction x d'un diamètre de la tour (T). Le détecteur (D) peut également être monté de façon rotative dans (T) pour analyser le gaz à différentes hauteurs.

On effectue un étalonnage de la réponse du millivoltmètre en prélevant et en analysant chimiquement l'acide retenu. On trace la courbe donnant la réponse en mV du milli-voltmètre en fonction de la teneur en vésicules exprimée par exemple en mg/m$^3$.

Les exemples suivants, se rapportant à une tour d'absorption du $SO_3$, illustrent l'invention de façon non limitative.

Pour les exemples suivants la teneur maximale acceptable en acide sulfurique vésiculaire a été fixée à 200mg/m$^3$.

Exemple 1:
Action sur le titre de l'acide de roulement et sur la température d'arrosage

Le détecteur indiquait une concentration en acide sulfurique vésiculaire de 2g/m$^3$ très supérieure au seuil acceptable choisi de 200mg/m$^3$.

Une analyse de l'acide de roulement a indiqué un titre de 98,1%. La température de l'acide à l'arrosage était de 63°C.

Dans un premier temps, on a augmenté le titre de l'acide à 98,8%. La concentration en vésicules devenait alors de 80mg/m$^3$. Ensuite on a augmenté, par paliers successifs, la température de l'acide à 75°C. La concentration de l'acide sulfurique vésiculaire s'est alors fixée à 60mg/m$^3$.

Exemple 2:
Action sur la charge de l'installation

L'installation fonctionnant à 100% de sa capacité, pour une température d'arrosage de 68°C et un titre en acide de 98,2%, le détecteur indiquait une teneur en vésicules de 2,57g/m$^3$.

On a ramené la charge de l'installation à 50% de sa capacité, tous les autres paramètres restant inchangés. La teneur en acide vésiculaire a été ramenée de ce fait à 150mg/m$^3$.

Exemple 3:
Action sur la température des gaz entrant dans la tour d'absorption

Le détecteur indiquait une concentration en acide vésiculaire de 2,1g/m$^3$. Le titre en acide étaite de 98,4% et la température d'arrosage de 72°C. Cette concentration en vésicules paraissait beaucoup trop importante pour ces conditions. La mesure de la température d'entrée des gaz dans la tour d'absorption indiquait une valeur de 260°C. On a ramené cette température à 240°C. La teneur en acide vésiculaire s'est alors fixée à 160mg/m$^3$.

**Revendication**

1. Dispositif pour la mesure in situ et en continu de la teneur en acide sulfurique vésiculaire des gaz sortant des tours d'échange gaz-liquide au cours de la préparation d'acide sulfurique par le procédé de contact, caractérisé en ce qu'il comprend:

(A) un corps constitué par un cylindre creux (1) en acier inoxydable, à l'intérieur duquel se trouvent deux tubes guides (2) et (2') en acier inoxydable ayant des axes parallèles à l'axe dudit cylindre creux et équidistants dudit axe, contenant chacun une fibre optique (3) et (3') l'une étant la fibre émettrice, l'autre la fibre réceptrice.

(B) une tête en polytétrafluoroéthylène (4) s'emboîtant à force dans la partie supérieure dudit corps, dont la face supérieure a la forme d'une cuvette à fond plat et dont la face inférieure comporte deux trous de visée cylindrique (5) et (5') de même axe que ceux desdits tubes guides, et une partie centrale (6) s'insérant de façon étanche entre lesdits tubes guides.

(C) deux capuchons (7') en polytétrafluoroéthylène entourant chacun de façon étanche l'une desdites fibres optiques à leur partie supérieure, comportant à leur partie supérieure un alésage (9) recevant une fenêtre en verre fixée de façon étanche, et à leur partie inférieure un filetage correspondant au filetage ménagé dans la fibre optique utilisée, ledit corps étant percé à sa partie inférieure de deux orifices situés à l'extrémité opposée à la tête (4) recevant chacun un tuyau d'amenée d'air, l'une permettant de balayer l'ensemble de l'appareil, l'autre débouchant en (10) dans ladite tête en polytétrafluoroéthylène au niveau des trous de visée.

## Patentanspruch

1. Vorrichtung zum kontinuierlichen Messen in situ des Gehalts an bläschenförmiger Schwefelsäure in den Gasen, die die Türme für den Austausch Glas-Flüssigkeit bei der Herstellung von Schwefelsäure nach dem Kontaktverfahren verlassen, dadurch gekennzeichnet, daß sie enthält:

(A) Einen aus einem Hohlzylinder (1) aus Edelstahl gebildeten Mantel, in dessen Innerem sich zwei geführte Rohre (2) und (2') aus Edelstahl befinden, die zur Achse des genannten Hohlzylinders parallele Achsen im gleichen Abstand haben und jedes eine optische Faser (3) und (3') enthalten, von denen die eine die aussendende, die andere die empfangende Faser ist.

(B) Einen Verschluß aus Polytetrafluoräthylen (4), der kraftschlüssig in das Oberteil des genannten Mantels eingreift und dessen Oberfläche die Form einer Schüssel mit ebenem Boden hat und dessen Innenfläche zwei zylindrische Sehlöcher (5) und (5') mit der gleichen Achse wie die der genannten geführten Rohre aufweist und einen Zentralteil (6), der sich dicht zwischen die geführten Rohre einfügt.

(C) Zwei Stopfen (7') aus Polytetrafluoräthylen, die jeder dicht eine der genannten optischen Fasern in ihrem Oberteil umgeben und in ihrem Oberteil eine Bohrung (9) für ein dicht befestigtes Glasfenster und in ihrem unteren Teil ein Gewinde enthalten, das dem in der verwendeten optischen Faser ausgesparten Gewinde entspricht, wobei der Mantel in seinem Unterteil mit zwei Öffnungen versehen ist, die sich an dem, dem Verschluß (4) gegenüberliegenden Ende befinden und jede ein Luftzufuhrrohr aufnehmen, von denen das eine die Spülung der gesamten Apparatur erlaubt und das andere bei (10) in den genannten Verschluß aus Polytetrafluoräthylen in der Höhe der Sehlöcher einmündet.

## Claims

1. Device for the *in situ* and continuous measurement of the content of vesicular sulphuric acid in the gases leaving the gas/liquid exchange towers during the preparation of sulphuric acid by the contact process, characterised in that it comprises:

(A) a body consisting of a hollow cylinder (1) made of stainless steel, inside which are located two guide tubes (2) and (2') made of stainless steel, which have axes parallel to the axis of said hollow cylinder and equidistant from said axis, each containing an optical fibre (3) and (3'), one being the transmitting fibre and the other the receiving fibre.

(B) a head made of polytetrafluoroethylene (4) force-fitting into the upper part of said body, the upper face of which has the form of a dish with a flat bottom and the lower face of which comprises two cylindrical sighting holes (5) and (5'), having the same axis as those of said guide tubes, and a central part (6) inserted in a leak-proof manner between said guide tubes.

(C) two cowls (7') made of polytetrafluoroethylene, each surrounding in a leak-proof manner one of said optical fibres in their upper part, containing in their upper part a bore (9) receiving a glass window fixed in a leak-proof manner, and in their lower part a thread corresponding to the thread made in the optical fibre used, said body being perforated in its lower part with two orifices located at the end opposite the head (4) and each receiving an air inflow pipe, one enabling the whole of the apparatus to be swept and the other opening at (10) into said head made of polytetrafluoroethylene at the level of the sighting holes.

Figure 1

Figure II